# EUROPEAN PATENT SPECIFICATION

(11) **EP 2 277 418 B1**
(45) Date of publication and mention of the grant of the patent: **04.05.2016**
(21) Application number: 10154406.2
(22) Date of filing: 23.02.2010
(51) Int. Cl.: A47J 31/44

(54) **Coffee-making machine combined with a milk frothing device**
Kaffeemaschine kombiniert mit einer Milchaufschäumungsvorrichtung
Machine à café combinée à un dispositif de formation de mousse de lait

(30) Priority: 20.07.2009 IT MI20090240 U
(43) Date of publication of application: 26.01.2011
(73) Proprietor: De'Longhi Appliances S.r.l., 31100 Treviso (IT)
(72) Inventor: De' Longhi, Giuseppe, 31100, TREVISO (IT)
(74) Representative: Rapisardi, Mariacristina

(56) References cited:
- EP-A1- 1 092 378
- US-A- 5 611 262
- US-A1- 2009 101 021

## Description

The present invention refers to a coffee-making machine combined with a milk frothing device.

It is common knowledge that, in order to increase the flexibility of use of coffee-makers, a milk frothing device is provided in combination with the coffee-maker to enable the preparation of a cappuccino.

The frother device comprises a milk container that generally stands on the coffee-maker's drip tray.

The milk container supports a hollow collector body with an air suction pathway, a milk suction pathway inside the container, an inlet pathway for the delivery of the steam generated by the coffee-maker's steam dispenser, and an outlet pathway for the delivery of the hot frothy milk that is supplied to an external delivery nozzle.

Inside the collector body there is a part shaped like a Venturi tube that, with the passage of the steam, creates a negative pressure and thus entrains air and milk, enabling them to be mixed. This solution is described, for instance, in EP2047779.

The current tendency to reduce the width of coffee-makers has given rise to considerable complications in the positioning of the milk container, given that the space remaining on the drip tray is sometimes insufficient.

US5611262 discloses a coffee maker combined with a frothing device having a removable milk container and US2009/0101021 discloses a milk frothing container connectable to a coffee maker

The proposed technical aim of the present invention is consequently to produce a coffee-maker combined with a milk frother device that enables the technical drawbacks of the known state of the art to be overcome.

Within the context of this technical aim, one object of the invention is to produce a coffee-maker compact in width combined with a milk frother device.

Another object of the invention is to produce a coffee-maker combined with a milk frother device that is versatile and extremely practical to use.

The above technical aim, as well as these and other objects according to the present invention, are achieved by a coffee-maker combined with a milk frother device according to claim 1.

The lateral positioning of the milk frother device in relation to the coffee-maker enables the required compact width of the coffee-maker to be maintained without having to forego the great practicality in use deriving from the fact that the milk frother device delivers the frothy hot milk directly into the cup without the user having to pick up the milk container and move The above technical aim, as well as these and other objects according to the present invention, are achieved by a coffee-maker combined with a milk frother device according to claim 1.

The lateral positioning of the milk frother device in relation to the coffee-maker enables the required compact width of the coffee-maker to be maintained without having to forego the great practicality in use deriving from the fact that the milk frother device delivers the frothy hot milk directly into the cup without the user having to pick up the milk container and move it in order to go and pour its contents into the cup. In particular, the preparation of a cappuccino is completely automatic once it has been selected by the user.

The container can be advantageously associated at the base on which it stands with a vertical movement that is extremely straightforward, natural and effective since the weight of the container itself and its contents facilitates the user in this displacement.

Other characteristics of the present invention are described, moreover, in the subsequent claims.

Additional characteristics and advantages will emerge more clearly from the description that follows of the coffee-maker combined with the frother device according to the present invention, as shown as a non-limiting example in the attached drawings, wherein:

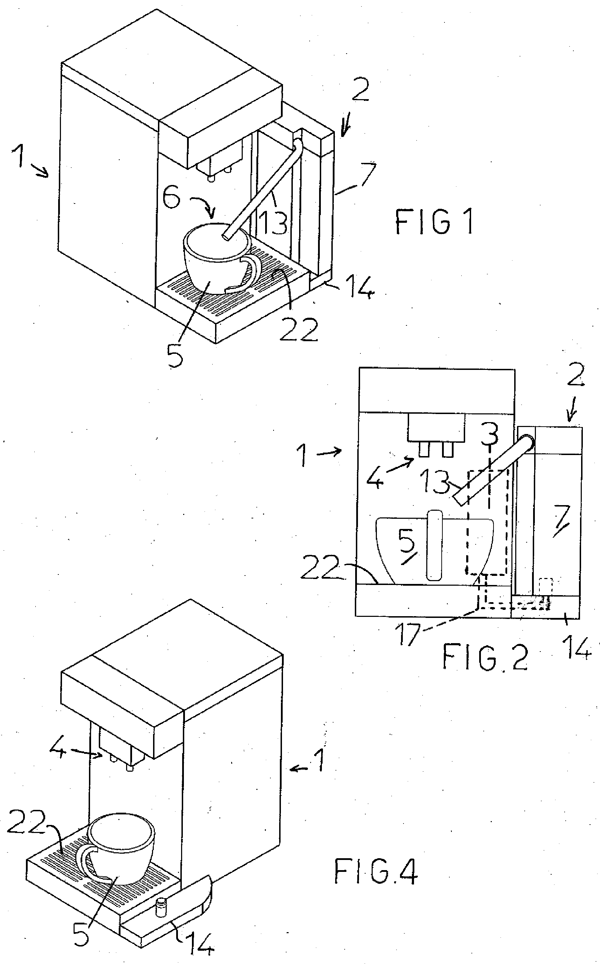

- figure 1 shows a prospective view of the coffee-maker combined with the frother device;
- figure 2 is a front view of the assembly in figure 1;

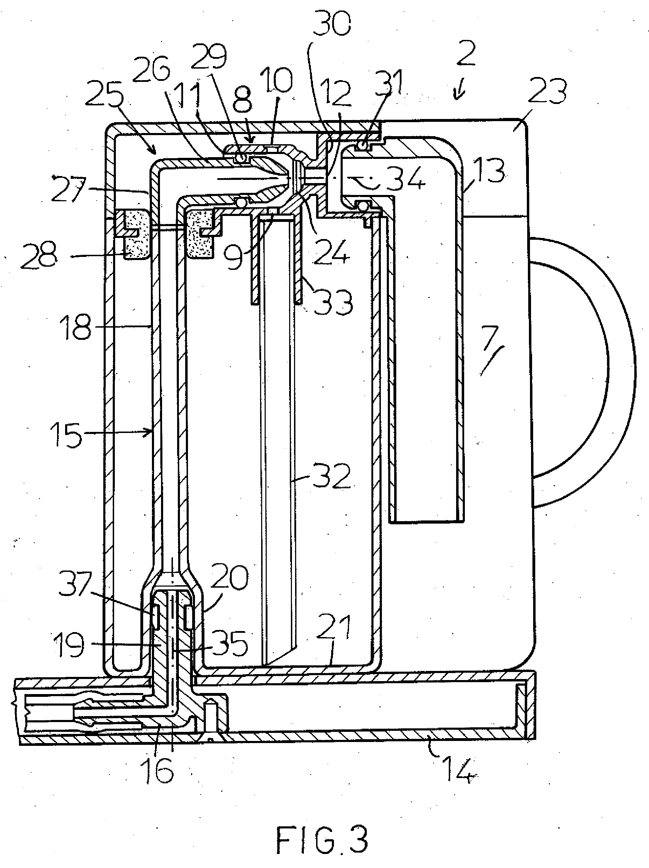

- figure 3 is a cross-sectional view of the milk frother device in figure 1; and
- figure 4 is a prospective view of the coffee-maker alone of the assembly in figure 1.

The above figures show a coffee-maker 1, combined with a milk frother device 2. According to the known art, the coffee-maker 1 comprises a steam or hot water dispenser, schematically represented by the reference number 3, and a unit 4 for delivering the coffee beverage into at least one cup 5, which may be positioned on a drip tray 22 in the coffee-maker 1, positioned in an area 6 underneath the delivery unit 4.

The steam or hot water dispenser 3 comprises at least one boiler served by a pump.

The frother device 2 comprises a container 7 directly or indirectly supporting a hollow collector body 8, with a milk suction pathway 9, an air suction pathway 10, a steam or hot water inlet pathway 11, and an outlet pathway 12 connected to a nozzle 13 for discharging directly into, or in a direction orientable towards, the area 6 for pouring the frothy hot milk into the cup 5 in order to mix it with the coffee beverage prepared by the machine 1.

The collector body 8 also has a portion 24 in the shape of a Venturi tube.

Under the effect of the passage of a flow of steam through the inlet pathway 11 to the outlet pathway 12 of the collector body 8, this portion 24 creates a negative pressure that entrains air coming from the pathway 10 and milk coming from the pathway 9 inside the collector body 8.

As a consequence, the steam heats the milk inside the collector body 8, which is emulsified with the air in order to produce a frothy hot milk that is delivered through the nozzle 13 and poured directly into the cup 5.

In the embodiment shown, the inlet pathway 11 and outlet pathway 12 of the collector body 8 are arranged along a common horizontal axis 34, while the pathway 9 and the pathway 10 are arranged crosswise to said common axis 34 of the inlet pathway 11 and outlet pathway 12.

In the embodiment shown, moreover, the nozzle 13 has an airtight connection, achieved by means of a gasket 31, to a bushing 30, obtained in a single piece with the collector body 8. The outlet pathway 12 opens in the centre of the bottom of the bushing 30.

The nozzle 13 thus associated with the collector body 8 is revolvable between a working position in which it is oriented towards the area 6 and a space-saving position in which it is retracted against the side wall of the container 7.

Inside the container 7, there is a cannula 32 for drawing the milk connected to a bushing 33 obtained in a single piece with the collector body 8. The milk suction pathway 9 opens in the centre of the bottom of the bushing 33.

The frother device 2 comprises a base 14 suitable for supporting the container 7 on the outside of the drip tray 22 in the coffee-maker 1, and in particular to one side of the drip tray 22.

There is also a conduit 15 providing a hydraulic connection between the steam or hot water dispenser 3 and the steam or hot water inlet pathway 11.

The conduit 15 comprises an intermediate portion of conduit 16 that extends inside the base 14, a first portion of conduit (schematically indicated by the reference number 17) that extends inside the coffee-maker 1, and a second portion of conduit 18 that extends inside the container 7.

In particular, the second portion of conduit 18 extends vertically through the container 7.

The intermediate portion of conduit 16 and the second portion of conduit 18 are advantageously configured so as to form a removable mechanical coupling in the sense of a vertical coupling axis 35.

The intermediate portion of conduit 16 has a first end shaping 19 that extends vertically above the base 14, while the second portion of conduit 18 has a second end shaping 20, in a shape conjugated with the first end shaping 19, that is recessed vertically from the bottom 21 of the container 7 so as to receive the first end shaping 19.

The second end shaping 20 is configured as a flaring of the second portion of conduit 18.

The first end shaping 19 has an external perimeter gasket 37, that ensures a seal for the connection with the second end shaping 20.

The base 14 extends laterally to the drip tray 22 in the coffee-maker 1, to which it is connected.

The base 14 is preferably connected permanently to the coffee-maker 1, as shown.

In particular, the base 14 is operatively connected to the coffee-maker 1 between a working position and a resting position underneath the drip tray 22. For example, the base 14 may be hinged to the drip tray 22, or it may be configured as a drawer suitable for inserting in and withdrawing from a cavity underneath the drip tray 22.

In both cases, it is necessary for the conduit 15, or at least a stretch of its first portion 17, to be flexible so as to enable the base 14 to change position. Alternatively, there may be an operative connection, revolving for instance around an axis of mutual coupling between the first portion of conduit 17 and the intermediate portion of conduit 16.

In particular, the collector body 8 is preferably supported by a lid 23 on the container 7.

The conduit 15 has a third portion of conduit 25 that extends inside the lid 23. This third portion of conduit 25 describes an angle of 90° and connects the second portion of conduit 18 to the inlet pathway 11.

The third portion of conduit 25 has a horizontal stretch 26 that penetrates inside the collector body 8 through the inlet pathway 11, and a vertical stretch 27 joined by means of an airtight gasket 28 to the second portion of conduit 18.

A gasket 29 attached to the external perimeter of the horizontal stretch 26 of the third portion of conduit 25 ensures a hydraulic seal against the internal surface of the collector body 8.

The container 7 can be removed from the base 14 so that it can also be used separately to store the milk in the refrigerator, in order to make some cold milk immediately available to the consumer.

In the case (not shown) in which the base 14 is detachable from the coffee-maker 1, the assembly comprising the container 7 mounted on its base 14 can also be placed in the refrigerator to store the cold milk.

To associate the container 7 with the base 14, it is only necessary to position it so as to centre the second end shaping 20 over the first end shaping 19, and then move the container 7 vertically downwards until the bottom 21 rests on the base 14.

The weight of the container 7 and its contents actively contribute to the successful completion of this procedure.

The procedure for preparing a cappuccino is briefly as follows.

When the coffee-maker 1 is used to prepare a cappuccino, the control unit inside the coffee-maker 1 prepares a dose of coffee infusion in the cup 5 and sends a flow of steam to the frother device 2 to produce a previously-established quantity of frothy hot milk, that is poured from the delivery nozzle 13 directly into the cup 5.

In an embodiment not shown, there may be means for adjusting the flow of air inside the collector body 8 along the air suction pathway 10 to enable the quantity of froth to be adjusted.

It is clearly possible to prepare the frothy hot milk first and then the coffee infusion in the cup 5, or vice versa.

By means of a specific command the coffee-maker can also prepare a beverage consisting of frothy hot milk alone. In this case, the same procedure as described above is repeated, without the preliminary phase for the preparation of a dose of coffee infusion in the cup 5.

The device for preparing a milk-based beverage thus conceived is susceptible to numerous modifications and variants, all coming within the scope of the invention. Moreover, all the related parts may be replaced by technically equivalent components.

In practical terms, any materials may be used and in any dimensions, according to need and the state of the art.

## Claims

1. A coffee-maker (1) combined with a milk frother device (2), said coffee-maker (1) comprising a steam or hot water dispenser (3) and a unit (4) for delivering the coffee beverage into at least one cup (5), which can be positioned on a drip tray (22) located in an area (6) underneath said delivery unit (4), said frother device (2) comprising a container (7) and a hollow collector body (8) with a milk suction pathway (9), an air suction pathway (10), a steam or hot water inlet pathway (11), and an outlet pathway (12) connected to a nozzle (13) for discharging directly into, or in a direction orientable towards said area (6) for pouring the frothy milk into said cup (5) so that it is mixed with the coffee beverage, wherein said frother device (2) comprises a base (14) for supporting said container (7) outside said drip tray (22), there also being a conduit (15) providing a hydraulic connection between said steam or hot water dispenser (3) and said steam or hot water inlet pathway (11), **characterised in that** said container (7) supports directly or indirectly said hollow collector body (8) and **in that** said conduit (15) comprises an intermediate portion of conduit (16) that extends inside said base (14), a first portion of conduit (17) that extends inside said coffee-maker (1), and a second portion of conduit (18) that extends inside said container (7), said intermediate portion of conduit (16) and said second portion of conduit (18) being configured so as to form a removable mechanical coupling in the sense of a vertical coupling axis (35).

2. A coffee-maker (1) combined with a milk frother device (2) according to claim 1, **characterised in that** said base (14) is located alongside said drip tray (22).

3. A coffee-maker (1) combined with a milk frother device (2) according to one or more of the previous claims, **characterised in that** said portion of intermediate conduit (16) has a first end shape (19) that extends vertically above said base (14), and said second portion of conduit (18) has a second end shape (20), in a shape conjugated with said first end shape (19), that is recessed vertically in the bottom (21) of said container (7), so as to receive the first end shape (19).

4. A coffee-maker (1) combined with a milk frother device (2) according to one or more of the previous claims, **characterised in that** said base (14) extends to the side of the drip tray (22) in said coffee-maker (1), to which it is connected.

5. A coffee-maker (1) combined with a milk frother device (2) according to one or more of the previous claims, **characterised in that** said base (14) is permanently connected to said coffee-maker (1).

6. A coffee-maker (1) combined with a milk frother device (2) according to one or more of the previous claims, **characterised in that** said base (14) is operatively connected to said coffee-maker (1) between a working position and a resting position underneath said drip tray (22).

7. A coffee-maker (1) combined with a milk frother device (2) according to one or more of the previous claims, **characterised in that** said first portion of conduit (17) has at least one stretch that is flexible or operatively coupled to said intermediate portion of conduit (16).

8. A coffee-maker (1) combined with a milk frother device (2) according to one or more of the previous claims, **characterised in that** said collector body (8) is supported by a lid (23) on said container (7).

9. A coffee-maker (1) combined with a milk frother device (2) according to one or more of the previous claims, **characterised in that** said collector body (8) has a portion (24) shaped like a Venturi tube.

10. A coffee-maker (1) combined with a milk frother device (2) according to one or more of the previous claims, **characterised in that** said second portion of conduit (18) extends in a vertical direction.

## Patentansprüche

1. Kaffeemaschine (1), kombiniert mit einer Milchaufschäumungsvorrichtung (2), wobei die Kaffeemaschine (1) eine Dampf- oder Heißwasserausgabe (3) und eine Einheit (4) zum Ausschenken des Kaffeegetränks in mindestens eine Tasse (5) umfasst, die auf einer Abtropfschale (22) abgestellt werden kann, befindlich in einem Bereich (6) unterhalb der Ausschenkeinheit (4), wobei die Milchaufschäumungsvorrichtung (2) einen Behälter (7) und einen hohlen Sammelkörper (8) mit einer Milchansaugleitung (9), einer Luftansaugleitung (10), einer Dampf- oder Heißwassereinlassleitung (11) und einer Auslassleitung (12) umfasst, verbunden mit einer Düse (13) zum direkten Abführen darin oder in eine Richtung, die zum Bereich (6) für das Ausgießen der aufgeschäumten Milch in die Tasse (5) ausgerichtet werden kann, sodass diese mit dem Kaffeegetränk vermischt wird, wobei die Aufschäumungsvorrichtung (2) eine Basis (14) zur Halterung des Behälters (7) außerhalb der Abtropfschale (22) umfasst, wobei ebenfalls eine Leitung (15) vorhanden ist, die eine hydraulische Verbindung zwischen der Dampf- oder Heißwasserausgabe (3) und der Dampf- oder Heißwassereinlassleitung (11) bereitstellt, **dadurch gekennzeichnet, dass** der Behälter (7) direkt oder indirekt den hohlen Sammelkörper (8) trägt und dadurch, dass die Leitung (15) einen Zwischenleitungsabschnitt (16) umfasst, der sich innerhalb der Basis (14) erstreckt, einen ersten Leitungsabschnitt (17), der sich innerhalb der Kaffeemaschine (1) erstreckt, und einen zweiten Leitungsabschnitt (18), der sich innerhalb des Behälters (7) erstreckt, wobei der Zwischenleitungsabschnitt (16) und der zweite Leitungsabschnitt (18) so ausgelegt sind, um eine entfernbare mechanische Kupplung im Sinne einer vertikalen Kupplungsachse (35) zu formen.

2. Kaffeemaschine (1), kombiniert mit einer Milchaufschäumungsvorrichtung (2) nach Anspruch 1, **dadurch gekennzeichnet, dass** diese Basis (14) entlang der Abtropfschale (22) befindlich ist.

3. Kaffeemaschine (1), kombiniert mit einer Milchaufschäumungsvorrichtung (2) nach einem oder mehreren der vorhergehenden Ansprüchen, **dadurch gekennzeichnet, dass** der Zwischenleitungsabschnitt (16) eine erste Endform (19) aufweist, die sich vertikal oberhalb der Basis (14) erstreckt, und dass der zweite Leitungsabschnitt (18) eine zweite Endform (20) in einer Form, gepaart mit der ersten Endform (19), aufweist, die vertikal im Boden (21) des Behälters (7) vertieft ist, sodass die erste Endform (19) aufgenommen wird.

4. Kaffeemaschine (1), kombiniert mit einer Milchaufschäumungsvorrichtung (2) nach einem oder mehreren der vorhergehenden Ansprüche, **dadurch gekennzeichnet, dass** diese Basis (14) sich zur Seite der Abtropfschale (22) in der Kaffeemaschine (1) erstreckt, an die sie angeschlossen ist.

5. Kaffeemaschine (1), kombiniert mit einer Milchaufschäumungsvorrichtung (2) nach einem oder mehreren der vorhergehenden Ansprüche, **dadurch gekennzeichnet, dass** diese Basis (14) dauerhaft mit der Kaffeemaschine (1) verbunden ist.

6. Kaffeemaschine (1), kombiniert mit einer Milchaufschäumungsvorrichtung (2) nach einem oder mehreren der vorhergehenden Ansprüche, **dadurch gekennzeichnet, dass** dies Basis (14) betriebswirksam mit der Kaffeemaschine (1) zwischen einer Betriebsstellung und einer Ruhestellung unterhalb der Abtropfschale (22) verbunden ist.

7. Kaffeemaschine (1), kombiniert mit einer Milchaufschäumungsvorrichtung (2) nach einem oder mehreren der vorhergehenden Ansprüche, **dadurch gekennzeichnet, dass** der erste Leitungsabschnitt (17) mindestens ein Teilstück aufweist, das flexibel oder betriebswirksam mit dem Leitungszwischenabschnitt (16) gekoppelt ist.

8. Kaffeemaschine (1), kombiniert mit einer Milchaufschäumungsvorrichtung (2) nach einem oder mehreren der vorhergehenden Ansprüche, **dadurch gekennzeichnet, dass** der Sammelkörper (8) durch einen Deckel (23) auf dem Behälter (7) gestützt wird.

9. Kaffeemaschine (1), kombiniert mit einer Milchaufschäumungsvorrichtung (2) nach einem oder mehreren der vorhergehenden Ansprüche, **dadurch gekennzeichnet, dass** der Sammelkörper (8) einen Abschnitt (24) aufweist, der wie ein Venturi-Rohr geformt ist.

10. Kaffeemaschine (1), kombiniert mit einer Milchaufschäumungsvorrichtung (2) nach einem oder mehreren der vorhergehenden Ansprüche, **dadurch gekennzeichnet, dass** sich der zweite Leitungsabschnitt (18) in einer vertikalen Richtung erstreckt.

## Revendications

1. Une machine à café (1) combinée à un dispositif de formation de mousse de lait (2), ladite machine à café (1) comprenant un distributeur de vapeur ou d'eau chaude (3) et une unité (4) pour acheminer la boisson au café à l'intérieur d'au moins une tasse (5), qui peut être positionnée sur un bac récepteur (22) situé dans une zone (6) en dessous de ladite unité d'acheminement (4), ledit dispositif de formation de mousse (2) comprenant un récipient (7) et un corps collecteur creux (8) avec un passage d'aspiration du lait (9), un passage d'aspiration de l'air (10), un passage d'entrée de la vapeur ou de l'eau chaude (11), et un passage de sortie (12) relié à une buse (13) pour acheminer directement à l'intérieur, ou dans une direction orientable vers ladite zone (6) pour verser le lait mousseux à l'intérieur de ladite tasse (5) de manière à ce qu'il soit mélangé avec la boisson au café, dans laquelle ledit dispositif de formation de mousse (2) comprend une base (14) pour soutenir ledit récipient (7) à l'extérieur dudit bac récepteur (22), ayant également un conduit (15) fournissant un raccordement hydraulique entre ledit distributeur de vapeur ou d'eau chaude (3) et ledit passage d'entrée de la vapeur ou de l'eau chaude (11), **caractérisé en ce que** ledit récipient (7) soutient directement ou indirectement ledit corps collecteur creux (8) et **en ce que** ledit conduit (15) comprend une portion intermédiaire de conduit (16) qui s'étend à l'intérieur de ladite base (14), une première portion de conduit (17) qui s'étend à l'intérieur de ladite machine à café (1), et une deuxième portion de conduit (18) qui s'étend à l'intérieur dudit récipient (7), ladite portion intermédiaire de conduit (16) et ladite deuxième portion de conduit (18) étant configurées de manière à former un accouplement mécanique amovible dans le sens d'un axe d'accouplement vertical (35).

2. Machine à café (1) combinée à un dispositif de formation de mousse de lait (2) selon la revendication 1, **caractérisée en ce que** ladite base (14) est située le long du bac récepteur (22).

3. Machine à café (1) combinée à un dispositif de formation de mousse de lait (2) selon une ou plusieurs des revendications précédentes, **caractérisée en ce que** ladite portion de conduit intermédiaire (16) a une première forme finale (19) qui s'étend verticalement au-dessus de ladite base (14), et **en ce que** ladite deuxième portion de conduit (18) a une deuxième forme finale (20), d'une forme conjuguée à ladite première forme finale (19), qui est encastrée verticalement dans le fond (21) dudit récipient (7), de manière à recevoir la première forme finale (19).

4. Machine à café (1) combinée à un dispositif de formation de mousse de lait (2) selon l'une ou plusieurs des revendications précédentes, **caractérisée en ce que** ladite base (14) s'étend vers le côté du bac récepteur (22) dans ladite machine à café (1), à laquelle il est relié.

5. Machine à café (1) combinée à un dispositif de formation de mousse de lait (2) selon la revendication 1, **caractérisée en ce que** ladite base (14) est en permanence reliée à ladite machine à café (1).

6. Machine à café (1) combinée à un dispositif de formation de mousse de lait (2) selon une ou plusieurs des revendications précédentes, **caractérisée en ce que** ladite base (14) est reliée à ladite machine à café (1) entre une position de fonctionnement et une position de repos en dessous dudit bac récepteur (22).

7. Machine à café (1) combinée à un dispositif de formation de mousse de lait (2) selon une ou plusieurs des revendications précédentes, **caractérisée en ce que** ladite première portion de conduit (17) a au moins une section qui est flexible ou fonctionnellement accouplée à la dite portion intermédiaire de conduit (16).

8. Machine à café (1) combinée à un dispositif de formation de mousse de lait (2) selon l'une ou plusieurs des revendications précédentes, **caractérisée en ce que** ledit corps collecteur (8) est soutenu par un couvercle (23) sur ledit récipient (7).

9. Machine à café (1) combinée à un dispositif de formation de mousse de lait (2) selon l'une ou plusieurs des revendications précédentes, **caractérisée en ce que** ledit corps collecteur (8) a une portion (24) ayant la forme d'un tube Venturi (7).

10. Machine à café (1) combinée à un dispositif de formation de mousse de lait (2) selon la revendication 1, **caractérisée en ce que** ladite portion de conduit (18) s'étend dans une direction verticale.
